# EUROPÄISCHE PATENTSCHRIFT

(11) **EP 3 486 420 B1**
(45) Veröffentlichungstag und Bekanntmachung des Hinweises auf die Patenterteilung: **30.12.2020**
(21) Anmeldenummer: 18206244.8
(22) Anmeldetag: 14.11.2018
(51) Int. Cl.: E06B 1/60, E04F 21/00, F16B 5/02, F16B 21/08

(54) **VORRICHTUNG ZUM POSITIONIEREN EINES FENSTERS ODER EINER TÜR**
METHOD FOR POSITIONING A WINDOW OR A DOOR
PROCÉDÉ DE POSITIONNEMENT D'UNE FENÊTRE OU D'UNE PORTE

(30) Priorität: 17.11.2017 DE 102017127119
(43) Veröffentlichungstag der Anmeldung: 22.05.2019
(73) Patentinhaber: MACO Technologie GmbH, 5020 Salzburg (AT)
(72) Erfinder: HABERSATTER, Mathias, 5050 Radstadt (AT); BAUMGARTNER, René, 5303 Thalgau (AT)
(74) Vertreter: Manitz Finsterwald Patent- und Rechtsanwaltspartnerschaft mbB

(56) Entgegenhaltungen:
- WO-A1-01/66896
- WO-A1-98/01647
- DE-A1- 4 421 127
- DE-A1- 19 860 269
- JP-A- H1 113 346
- US-A- 4 910 876

## Beschreibung

Die vorliegende Erfindung betrifft eine Vorrichtung zum Positionieren eines Fensters oder einer Tür in einer Gebäudeöffnung, mit wenigstens einem Distanzelement, das einen Kopplungsabschnitt für eine Kopplung mit dem Fenster oder der Tür und einen zum Anlegen an eine Umrandung der Gebäudeöffnung ausgebildeten Anlageabschnitt aufweist, wobei für eine Verschiebung des Fensters oder der Tür innerhalb der Gebäudeöffnung eine Verstelleinrichtung vorgesehen ist, mittels welcher der Anlageabschnitt relativ zu dem Kopplungsabschnitt in und entgegen einer Verstellrichtung verstellbar ist.

Der Einbau von Fenstern und Türen in Bauwerken ist relativ zeitaufwändig und mühsam, weil auf eine exakte horizontale und vertikale Ausrichtung zu achten ist und im Allgemeinen die Breite der Fuge zwischen dem Blendrahmen des Fensters oder der Tür und der Umrandung der Gebäudeöffnung in einem vorgegebenen Toleranzbereich liegen soll. Die Abstützung und Positionierung von Fenstern und Türen beim Einbau kann mittels Klötzen oder Keilen erfolgen, die zur Höhenverstellung gegeneinander verschoben werden. Die Handhabung der Klötze oder Keile ist aber schwierig, insbesondere bei großflächigen und dementsprechend schweren Fenstern und Türen.

Die DE 44 21 127 A1 offenbart eine Justiereinrichtung für Fenster und Türen, die aus zwei Gewindeteilen sowie entsprechenden Stützplatten zusammengesetzt ist. An der Mantelfläche einer Gewindehülse können Radialbohrungen zum Einstecken eines Hebelwerkzeugs sowie Rändelungen für eine Handverstellung vorgesehen sein.

Die WO 01/66896 offenbart ein Fenster, bei welchem ein Hohlkörper und ein Schraubbolzen dazu vorgesehen sind, einen inneren Fensterrahmen gegenüber einem einbetonierten äußeren Fensterrahmen zu positionieren. Während der Hohlkörper eine Stützplatte aufweist und für eine axiale Positionierung ausgelegt ist, kann mittels eines konischen Vorsprungs des inneren Schraubbolzens eine seitliche Positionierung vorgenommen werden.

Es ist eine Aufgabe der Erfindung, einen schnelleren und einfacheren Einbau von Fenstern und Türen in Gebäudeöffnungen zu ermöglichen.

Die Lösung der Aufgabe erfolgt durch eine Vorrichtung mit den Merkmalen des Anspruchs 1.

Erfindungsgemäß weist die Verstelleinrichtung eine sich entlang der Verstellrichtung erstreckende erste Gewindespindel auf, die in oder entgegen der Verstellrichtung am Kopplungsabschnitt oder am Anlageabschnitt abstützbar ist und mit einer in der entgegengesetzten Richtung am anderen Element von Kopplungsabschnitt und Anlageabschnitt abstützbaren ersten Spindelmutter zusammenwirkt.

Durch ein Verdrehen der ersten Spindelmutter gegenüber der ersten Gewindespindel kann der durch das Distanzelement vorgegebene Abstand zwischen dem Kopplungsabschnitt und dem Anlageabschnitt verändert werden. Wenn der Blendrahmen des einzubauenden Fensters oder der einzubauenden Tür über ein oder mehrere erfindungsgemäße Distanzelemente am unteren Rand der Gebäudeöffnung abgestützt ist, lässt sich somit auf schnelle und einfache Weise durch Verdrehen der ersten Gewindespindel oder der ersten Spindelmutter eine Höhenverstellung des Fensters vornehmen. Im Falle einer Abstützung des Blendrahmens an zwei voneinander beabstandeten Stellen lässt sich zudem durch unterschiedliche Höheneinstellung die horizontale Neigung des Fensters oder der Tür anpassen. In ähnlicher Weise kann die seitliche Position des Fensters oder der Tür mittels eines oder mehrerer seitlich eingefügter erfindungsgemäßer Distanzelemente angepasst werden. Nach der Positionierung kann das Fenster oder die Tür in der Gebäudeöffnung befestigt werden, zum Beispiel durch Verschrauben. Die Distanzelemente können in dem Spalt zwischen dem Fenster oder der Tür und der Umrandung der Gebäudeöffnung verbleiben und beispielsweise eingeschäumt werden.

Das Verdrehen einer Spindelmutter gegenüber einer Gewindespindel ist wesentlich schneller und einfacher zu bewerkstelligen als beispielsweise das Verschieben von Keilen oder Klötzen gegeneinander. Zudem ermöglicht der durch die Gewindespindel und die Spindelmutter gebildete Spindeltrieb eine besonders exakte Positionsverstellung.

Die Erfindung erleichtert insbesondere den Einbau von Fenstern, die einen Blendrahmen und einen gegenüber diesem beweglichen Flügel aufweisen. Unter Verwendung einer erfindungsgemäßen Vorrichtung oder mehrerer erfindungsgemäßer Vorrichtungen kann die Montage eines solchen Fensters bei geschlossenem Flügel erfolgen, weil der Monteur nicht durch die Fensteröffnung hindurchgreifen oder um das Blendrahmenprofil herumgreifen muss. Dadurch ist trotz unvermeidlicher Bauteiltoleranzen eine korrekte Ausrichtung des Flügels relativ zum Blendrahmen gewährleistet. Im Falle einer Montage bei geöffnetem Flügel kann es dagegen zu einem relativen Verzug zwischen Blendrahmen und Flügel kommen, der schlimmstenfalls zu einem Anschlagen, Reiben oder Klemmen des Flügels beim Schließvorgang führt.

Es ist darauf hinzuweisen, dass die erste Spindelmutter nicht die Form einer herkömmlichen Schraubenmutter haben muss. Vielmehr ist jedes Bauteil als Spindelmutter anzusehen, das ein Innengewinde aufweist, welches zu dem Außengewinde der Gewindespindel passt. Je nach Ausführungsform kann entweder die Spindelmutter oder die Gewindespindel drehend beaufschlagt werden, um die Verstelleinrichtung zu betätigen.

Der Kopplungsabschnitt muss im Übrigen nicht zwingend am Fenster oder der Tür befestigbar sein. Vielmehr kann der Kopplungsabschnitt grundsätzlich auch zum bloßen Anlegen an ein Rahmenprofil des Fensters oder der Tür ausgebildet sein. Ein solches Anlegen ist im Sinne der vorliegenden Offenbarung ebenfalls als "Kopplung" anzusehen.

Eine Abstützbarkeit der ersten Gewindespindel am Kopplungsabschnitt oder am Anlageabschnitt kann auch durch eine einteilige Ausbildung der Gewindespindel mit dem Kopplungsabschnitt oder dem Anlageabschnitt gegeben sein. Analoges gilt auch für die Abstützbarkeit der ersten Spindelmutter am anderen Element von Kopplungsabschnitt und Anlageabschnitt.

Die Verstellrichtung verläuft vorzugsweise in der Flügelebene des Fensters oder der Tür, wenn das Distanzelement mit dem Fenster oder der Tür gekoppelt ist und gegebenenfalls der Flügel geschlossen ist.

Bei einer erfindungsgemäßen Vorrichtung ist vorgesehen, dass die Verstelleinrichtung eine zweite Gewindespindel aufweist, die sich entlang der Verstellrichtung erstreckt und derart mit einer zweiten Spindelmutter zusammenwirkt, dass sowohl durch ein Verdrehen der ersten Spindelmutter gegenüber der ersten Gewindespindel als auch durch ein Verdrehen der zweiten Spindelmutter gegenüber der zweiten Gewindespindel der Anlageabschnitt relativ zu dem Kopplungsabschnitt in und entgegen der Verstellrichtung verstellbar ist. Der Benutzer kann dann wahlweise die erste Spindelmutter oder die zweite Spindelmutter verdrehen, um die Verstelleinrichtung zu betätigen.

Erfindungsgemäß weisen die erste Gewindespindel und die zweite Gewindespindel unterschiedliche Gewindesteigungen auf. Dies ermöglicht eine unterschiedlich starke Abstandsverstellung, je nachdem, welche der beiden Spindelmuttern verdreht wird.

Bevorzugt ist an der ersten Gewindespindel und/oder an der ersten Spindelmutter ein Betätigungsabschnitt für ein direktes manuelles Verdrehen der ersten Gewindespindel gegenüber der ersten Spindelmutter durch einen Benutzer vorgesehen. Dies ermöglicht eine besonders einfache Konstruktion. Das manuelle Verdrehen kann werkzeuglos oder mit Hilfe eines Werkzeugs wie zum Beispiel eines Gabelschlüssels erfolgen.

Eine Ausführungsform der Erfindung sieht vor, dass der Betätigungsabschnitt ein Griffmerkmal und/oder ein Formschlussmerkmal, insbesondere eine Riffelung und/oder ein Kantprofil, aufweist. Während sich beispielsweise eine Riffelung in besonderer Weise für eine werkzeuglose manuelle Betätigung der Verstelleinrichtung eignet, ermöglicht ein Kantprofil wie zum Beispiel ein Sechskantprofil die einfache Betätigung mittels eines entsprechenden Werkzeugs.

Der Betätigungsabschnitt kann einstückig mit der ersten Gewindespindel oder mit der ersten Spindelmutter ausgebildet sein. Vorzugsweise ist es also die erste Gewindespindel oder die erste Spindelmutter selbst, die von einem Benutzer zu verdrehen ist. Dies ermöglicht eine besonders intuitive Bedienung der Verstelleinrichtung. Grundsätzlich kann der Betätigungsabschnitt jedoch auch an einem separaten Bauteil vorgesehen sein, das mit der ersten Gewindespindel oder mit der ersten Spindelmutter drehfest gekoppelt ist.

Der Anlageabschnitt kann eine Stützplatte umfassen. Diese kann leicht in Anlage mit dem seitlichen, oberen oder unteren Rand einer Gebäudeöffnung gebracht werden. Grundsätzlich könnte der Anlageabschnitt auch komplex geformt sein, wenn zum Beispiel im Bereich der Umrandung der Gebäudeöffnung eine entsprechende komplementäre Form ausgebildet ist.

Eine Ausführungsform der Erfindung sieht vor, dass die erste Gewindespindel mit einer zum Feststellen der ersten Spindelmutter vorgesehenen Kontermutter zusammenwirkt. Mittels der Kontermutter kann ein weiteres Verdrehen der Spindelmutter gegenüber der Gewindespindel nach Erreichen der gewünschten Positionierung verhindert werden. Dadurch wird das insbesondere bei der Verwendung von Klötzen häufig auftretende Problem einer nachträglichen Positionsverstellung vermieden. Die Kontermutter kann wie die erste Spindelmutter einen Betätigungsabschnitt für ein direktes manuelles Verdrehen, also beispielsweise ein Griffmerkmal und/oder ein Formschlussmerkmal, aufweisen.

Es kann vorgesehen sein, dass die zweite Gewindespindel drehfest mit der ersten Spindelmutter gekoppelt und vorzugsweise einstückig mit dieser ausgebildet ist oder dass die erste Gewindespindel drehfest mit der zweiten Spindelmutter gekoppelt und vorzugsweise einstückig mit dieser ausgebildet ist. Dadurch ergibt sich eine teleskopartige Konfiguration, welche besonders einfach und platzsparend ist.

Die erste Spindelmutter und/oder die zweite Spindelmutter kann gegenüber dem Kopplungsabschnitt drehbar gelagert sein. Insbesondere kann eine Gleitlagerung vorgesehen sein. Der Kopplungsabschnitt muss dann bei einem Verdrehen der ersten Spindelmutter und/oder der zweiten Spindelmutter nicht mitgedreht werden, so dass er dementsprechend fest am Fenster oder der Tür angebracht werden kann.

Insbesondere kann die erste Gewindespindel ein Regelgewinde und die zweite Gewindespindel ein Feingewinde aufweisen, oder umgekehrt. Eine Spindelmutter kann dann für eine Grobverstellung und die andere Spindelmutter für eine Feinverstellung genutzt werden. Die Positionierung eines Fensters oder einer Tür in einer Gebäudeöffnung kann dadurch weiter vereinfacht werden.

Gemäß einer weiteren Ausführungsform der Erfindung ist vorgesehen, dass der Kopplungsabschnitt, der Anlageabschnitt, die erste Gewindespindel und/oder die erste Spindelmutter aus einem Kunststoff, insbesondere aus einem Regranulat, gefertigt ist/sind. Das entsprechende Distanzelement kann besonders kostengünstig gefertigt werden, so dass es als Einwegartikel gehandhabt werden kann.

Der Kopplungsabschnitt kann für eine form- oder kraftschlüssige Verbindung, insbesondere für eine Rast-, Schnapp- oder Klipsverbindung, mit einem Blendrahmenprofil des Fensters oder der Tür ausgebildet sein. Das Distanzelement kann dann in einfacher Weise bereits vor der Montage am Fenster oder der Tür befestigt werden. Insbesondere ist es auf einfache Weise möglich, Fenster und Türen bereits mit angebrachten Distanzelementen auszuliefern. Ein mühseliges Einfügen von Distanzelementen zwischen den Blendrahmen und die Umrandung der Gebäudeöffnung ist dann nicht erforderlich.

Vorzugsweise weist der Kopplungsabschnitt wenigstens ein federndes Rastelement zum Hintergreifen eines am Blendrahmenprofil vorgesehen Profilvorsprungs auf. Profilvorsprünge sind bei vielen gängigen Blendrahmenprofilen vorhanden. Insbesondere kann das federnde Rastelement als Rastzunge oder als Rasthaken ausgeführt sein.

Alternativ oder zusätzlich kann der Kopplungsabschnitt einen Schaft aufweisen, der zum Einstecken in eine am Blendrahmenprofil vorgesehene Aufnahme ausgebildet ist. Da sich der Kopplungsabschnitt hierbei nach der Montage wenigstens zum Teil innerhalb des Blendrahmenprofils befindet, wird eine besonders niedrige Bauhöhe erzielt.

Das Distanzelement kann eine Durchführung für ein Befestigungsmittel aufweisen, die sich von dem Kopplungsabschnitt bis zum Anlageabschnitt durch das gesamte Distanzelement hindurch erstreckt. Die endgültige Befestigung des Fensters oder der Tür am Mauerwerk kann bei dieser Ausgestaltung durch das Distanzelement hindurch erfolgen. Beispielsweise kann eine Schraube durch das Blendrahmenprofil und das Distanzelement hindurch bis in das Mauerwerk geführt werden. Für die Befestigung des Fensters oder der Tür sind dann keine Zusatzbauteile wie Winkel, Platten oder dergleichen erforderlich.

Gemäß einer weiteren Ausgestaltung der Erfindung ist an der ersten Gewindespindel oder an der ersten Spindelmutter ein Formschlussmerkmal, insbesondere ein Kantprofil, ausgebildet, das durch eine Ausnehmung des Kopplungsabschnitts zugänglich ist. Bei dieser Ausgestaltung ist eine nachträgliche Positionsverstellung möglich - selbst wenn der Spalt zwischen dem Blendrahmen und dem Mauerwerk bereits geschlossen oder abgedeckt ist.

Der Kopplungsabschnitt und der Anlageabschnitt können über ein Gelenk miteinander in Verbindung stehen, insbesondere über ein Kugelgelenk. Dadurch können Ausrichtungstoleranzen, Unebenheiten und dergleichen ausgeglichen werden.

Eine erfindungsgemäße Vorrichtung kann einen Satz von zwei, vorzugsweise von wenigstens vier wie vorstehend beschriebenen Distanzelementen umfassen, die jeweilige erste Gewindespindeln und jeweilige erste Spindelmuttern aufweisen. Dies ermöglicht eine Positionierung in mehreren Richtungen.

Die Offenbarung betrifft auch eine Vorrichtung zum Positionieren eines Fensters oder einer Tür in einer Gebäudeöffnung, mit wenigstens einer Neigungsprüfeinrichtung, die mit dem Fenster oder der Tür in Kontakt zu bringen ist und die Neigung des mit ihr in Kontakt gebrachten Fensters oder der mit ihr in Kontakt gebrachten Tür gegenüber einer Vertikalebene und/oder gegenüber einer Horizontalebene anzeigt.

Als Neigungsprüfeinrichtung wird üblicherweise eine tragbare Wasserwaage verwendet, die an eine ebene Fläche des Fensters oder der Tür angelegt und nach dem Prüfen wieder entfernt und weggelegt wird. Es ist jedoch mühsam, gleichzeitig die Wasserwaage in der gewünschten Position zu halten und eine Neigungsveränderung des Fensters oder der Tür herbeizuführen.

Offenbarungsgemäß weist die Neigungsprüfeinrichtung Befestigungsmittel für eine lösbare oder dauerhafte Befestigung der Neigungsprüfeinrichtung an dem Fenster oder der Tür auf.

Dadurch dass die Neigungsprüfeinrichtung am Fenster oder der Tür befestigbar ist, muss diese beim Positioniervorgang nicht festgehalten werden. Der Benutzer kann sich ganz auf die Neigungsveränderung des Fensters oder der Tür konzentrieren, beispielsweise mittels einer wie eingangs beschrieben gestalteten Positioniervorrichtung. Der lagerichtige Einbau von Fenstern von Türen wird dadurch beträchtlich vereinfacht.

Von besonderem Vorteil ist eine Vorrichtung zum Positionieren eines Fensters oder einer Tür in einer Gebäudeöffnung, die wenigstens ein wie vorstehend beschriebenes Distanzelement und zusätzlich wenigstens eine Neigungsprüfeinrichtung mit Befestigungsmitteln für eine lösbare oder dauerhafte Befestigung der Neigungsprüfeinrichtung an dem Fenster oder der Tür umfasst.

Die Neigungsprüfeinrichtung kann wenigstens eine Libelle, vorzugsweise zwei unterschiedlich ausgerichtete Libellen, umfassen. Bevorzugt ist die Neigungsprüfeinrichtung also als Wasserwaage ausgeführt, die am Fenster oder der Tür befestigt werden kann. Von besonderem Vorteil ist hierbei, dass Libellen batterielos arbeiten und zudem kostengünstig erhältlich sind.

Es kann vorgesehen sein, dass die Befestigungsmittel für eine form- oder kraftschlüssige Verbindung, insbesondere für eine Rast-, Schnapp- oder Klipsverbindung, mit einem Blendrahmenprofil des Fensters oder der Tür ausgebildet sind. Dies ermöglicht ein besonders schnelles und einfaches Anbringen der Neigungsprüfeinrichtung am Fenster oder der Tür.

Die Neigungsprüfeinrichtung kann an einem länglichen Grundkörper angeordnet sein. Dies ermöglicht eine besonders zuverlässige und exakte Neigungsprüfung, weil die Neigungsprüfeinrichtung im befestigten Zustand über eine relativ große Fläche mit dem Blendrahmenprofil des Fensters oder der Tür in Kontakt steht.

Der Grundkörper kann eine Leiste mit einer Länge von wenigstens 20 cm, vorzugsweise von wenigstens 40 cm, umfassen.

Vorzugsweise ist der Grundkörper aus einem Kunststoff, insbesondere aus einem Regranulat, gefertigt. Dies ermöglicht eine besonders kostengünstige Fertigung der Neigungsprüfeinrichtung, so dass es nicht von Nachteil ist, wenn diese mit eingebaut wird, also beispielsweise eingeschäumt wird. Grundsätzlich ist es aber auch möglich, die Neigungsprüfeinrichtung nach Beendigung des Positioniervorgangs für eine Wiederverwendung vom Fenster oder der Tür abzunehmen.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: zeigt ein Fenster, das mittels einer erfindungsgemäßen Positioniervorrichtung in einer Gebäudeöffnung zu positionieren ist.
- Fig. 2: ist eine Seitenansicht eines Distanzelements der in Fig. 1 gezeigten Positioniervorrichtung.
- Fig. 3: ist eine Schnittansicht des in Fig. 2 gezeigten Distanzelements bei Abstützung eines Blendrahmens des Fensters gegenüber der Umrandung der Gebäudeöffnung.
- Fig. 4: ist eine perspektivische Darstellung eines alternativ gestalteten Distanzelements einer erfindungsgemäßen Positioniervorrichtung.
- Fig. 5: zeigt einen seitlichen Schnitt durch das in Fig. 4 gezeigte Distanzelement.
- Fig. 6: zeigt das Distanzelement gemäß Fig. 5 bei Abstützung eines Blendrahmens des Fensters gegenüber der Umrandung der Gebäudeöffnung.
- Fig. 7: ist eine perspektivische Darstellung eines weiteren alternativ gestalteten Distanzelements einer erfindungsgemäßen Positioniervorrichtung.

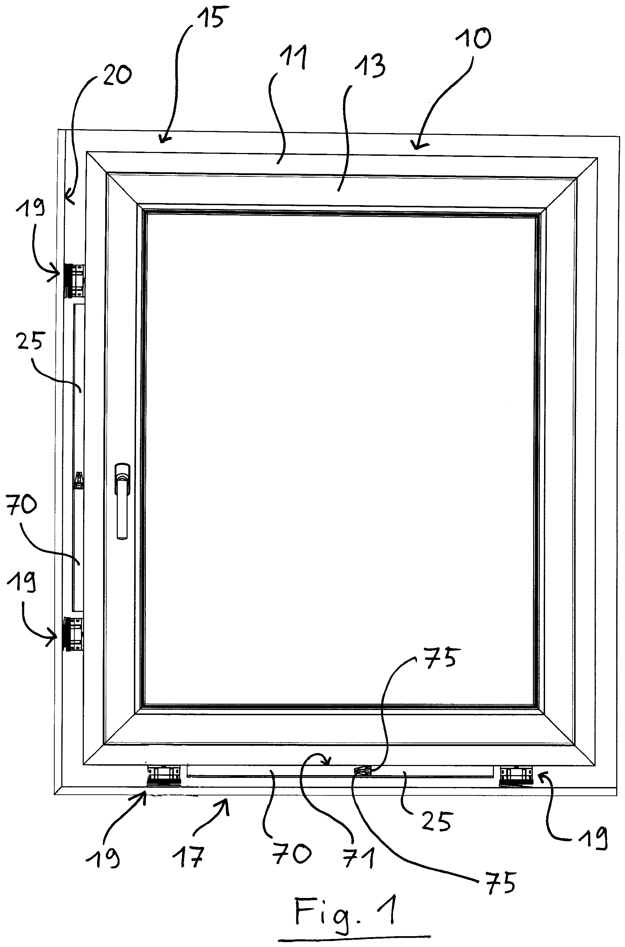

Das in Fig. 1 gezeigte Fenster 10 umfasst einen Blendrahmen 11 sowie einen drehbaren Flügel 13 und ist zum Einbau in eine Gebäudeöffnung 15 vorgesehen. Um das Fenster 10 korrekt in der Gebäudeöffnung 15 zu positionieren und auszurichten, ist eine Positioniervorrichtung 17 vorgesehen, die nachfolgend genauer beschrieben wird.

Die gemäß einer Ausführungsform der Erfindung gestaltete Positioniervorrichtung 17 umfasst vier Distanzelemente 19, von denen wie dargestellt zwei an der Unterseite des Blendrahmens 11 und zwei an der im Bild linken Seite des Blendrahmens 11 angeordnet sind. Das Fenster 10 ist durch die Distanzelemente 19 gegenüber der Umrandung 20 der Gebäudeöffnung 15 abgestützt.

Weiterhin umfasst die Positioniervorrichtung 17 zwei Neigungsprüfeinrichtungen 25, von denen eine an der Unterseite des Blendrahmens 11 und eine an der im Bild linken Seite des Blendrahmens 11 angeordnet ist.

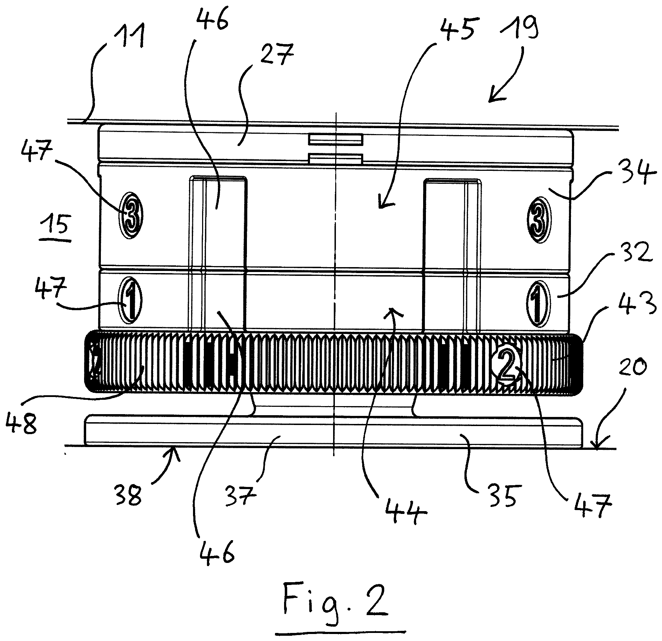

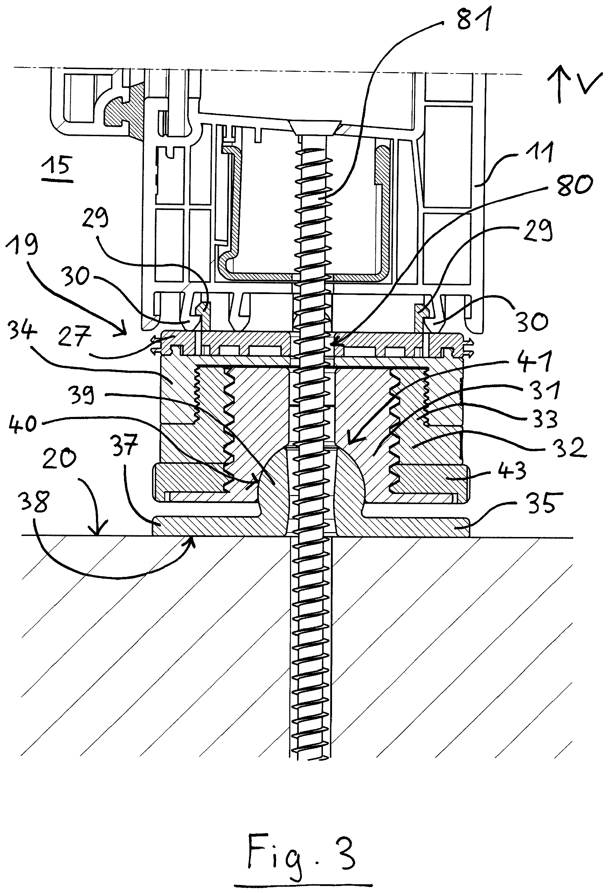

Fig. 2 zeigt eines der Distanzelemente 19 in einer Seitenansicht. Bei der dargestellten Ausführungsform weist das Distanzelement 19 eine zumindest im Wesentlichen zylindrische Grundgestalt auf. Das Distanzelement 19 ist über einen Kopplungsabschnitt 27 am Blendrahmen 11 befestigbar. Zu diesem Zweck sind an dem Kopplungsabschnitt 27 zwei federnde Rasthaken 29 vorgesehen, wie in der Schnittansicht gemäß Fig. 3 zu erkennen ist. Die Rasthaken 29 sind wie dargestellt gegensätzlich angeordnet und hintergreifen jeweilige Profilvorsprünge 30 des Blendrahmens 11.

Der Kopplungsabschnitt 27 ist über eine erste Gewindespindel 31, eine mit dieser zusammenwirkende erste Spindelmutter 32, eine zweite Gewindespindel 33, eine mit dieser zusammenwirkende zweite Spindelmutter 34 sowie einen Anlageabschnitt 35 an der Umrandung 20 der Gebäudeöffnung 15 abgestützt. Bei dem Anlageabschnitt 35 handelt es sich um eine Stützplatte 37 mit einer ebenen Anlagefläche 38. An der Stützplatte 37 ist ein Kugelkopf 39 ausgebildet, der in einer Kugelkopfaufnahme 40 des Distanzelements 19 aufgenommen ist. Der Kopplungsabschnitt 27 und der Anlageabschnitt 35 stehen somit über ein Kugelgelenk 41 miteinander in Verbindung.

Die Kugelkopfaufnahme 40 ist in demjenigen Bauteil ausgebildet, welches auch die erste Gewindespindel 31 trägt. Die erste Spindelmutter 32 ist wie dargestellt einstückig mit der zweiten Gewindespindel 33 ausgebildet. Die zweite Spindelmutter 34 ist gleitend drehbar am Kopplungsabschnitt 27 gelagert. Die erste Gewindespindel 31 wirkt außer mit der ersten Spindelmutter 32 auch mit einer zu dieser benachbart angeordneten Kontermutter 43 zusammen. Fig. 3 zeigt einen Zustand, in welchem die erste Spindelmutter 32 bis auf Anschlag auf die erste Gewindespindel 31 aufgedreht ist und gleichermaßen die zweite Spindelmutter 34 bis auf Anschlag auf die zweite Gewindespindel 33 aufgedreht ist. Der durch das Distanzelement 19 vorgegebene Abstand zwischen dem Kopplungsabschnitt 27 und dem Anlageabschnitt 35 ist hierbei minimal.

Wenn ausgehend von dem in Fig. 3 gezeigten Zustand die erste Spindelmutter 32 gegenüber der ersten Gewindespindel 31 derart verdreht wird, dass sie sich vom Anschlag weg bewegt, erfolgt eine Vergrößerung des Abstands zwischen dem Kopplungsabschnitt 27 und dem Anlageabschnitt 35 und demgemäß eine Verschiebung des Blendrahmens 11 gegenüber der Umrandung 20 der Gebäudeöffnung 15 in einer Verstellrichtung V. Gleichermaßen erfolgt bei einem Verdrehen der zweiten Spindelmutter 34 gegenüber der zweiten Gewindespindel 33 vom Anschlag weg eine Verschiebung des Blendrahmens 11 gegenüber der Umrandung 20 der Gebäudeöffnung 15 in der Verstellrichtung V.

Die erste Gewindespindel 31 und die erste Spindelmutter 32 weisen ein Regelgewinde auf, während die zweite Gewindespindel 33 und die zweite Spindelmutter 34 ein Feingewinde aufweisen. Somit kann für eine Grobverschiebung des Blendrahmens 11 die erste Spindelmutter 32 und für eine Feinverschiebung des Blendrahmens 11 die zweite Spindelmutter 34 verdreht werden. Das Verdrehen der Spindelmuttern 32, 34 kann auf direktem manuellem Wege und insbesondere werkzeuglos erfolgen, da die Spindelmuttern 32, 34 jeweilige Betätigungsabschnitte 44, 45 mit Griffmerkmalen 46 (Fig. 2) aufweisen. Die Kontermutter 43 trägt eine umfangsseitige Riffelung 48.

Beim Positionieren des Fensters 10 innerhalb der Gebäudeöffnung 15 kann ein Benutzer zunächst durch Verdrehen der ersten Spindelmutter 32 eine Grobpositionierung vornehmen und anschließend die Stellung der ersten Spindelmutter 32 mittels der Kontermutter 43 fixieren. Anschließend kann er zur Feinpositionierung die zweite Spindelmutter 34 verdrehen, wobei ein unerwünschtes Mitdrehen der ersten Spindelmutter 32 aufgrund der Kontermutter 43 unterbunden wird. Um die Handhabung des Distanzelements 19 zu vereinfachen, sind an der ersten Spindelmutter 32, der Kontermutter 43 sowie der zweiten Spindelmutter 34 Hinweiszeichen 47 (Fig. 2) vorgesehen, welche die Reihenfolge der Arbeitsschritte beim Positionieren verdeutlichen.

Die endgültige Befestigung des Fensters 10 am Mauerwerk erfolgt wie in Fig. 3 erkennbar durch das Distanzelement 19 hindurch. Das Distanzelement 19 ist zu diesem Zweck mit einer Durchführung 80 für eine Schraube 81 versehen. Vorzugsweise sind alle Bauteile des Distanzelements 19, insbesondere der Kopplungsabschnitt 27, die erste Gewindespindel 31, die erste Spindelmutter 32, die zweite Gewindespindel 33, die zweite Spindelmutter 34, die Kontermutter 43 sowie die Stützplatte 37 aus einem Kunststoff, insbesondere aus einem Regranulat, gefertigt. Das Distanzelement 19 kann somit besonders kostengünstig gefertigt werden, so dass es für einen Gebrauch als Einwegartikel geeignet ist.

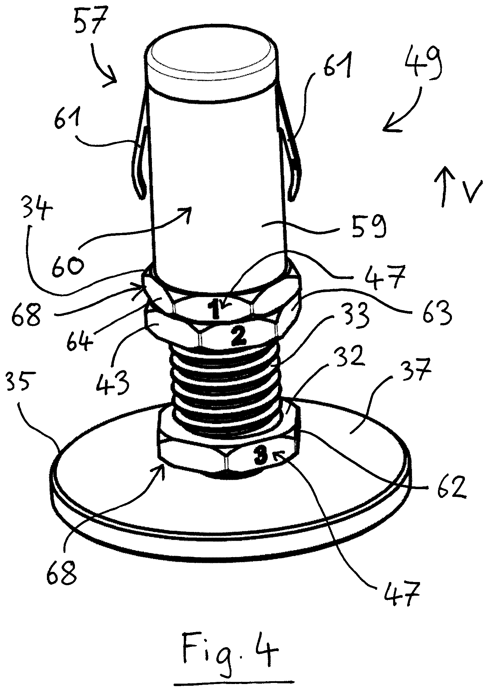

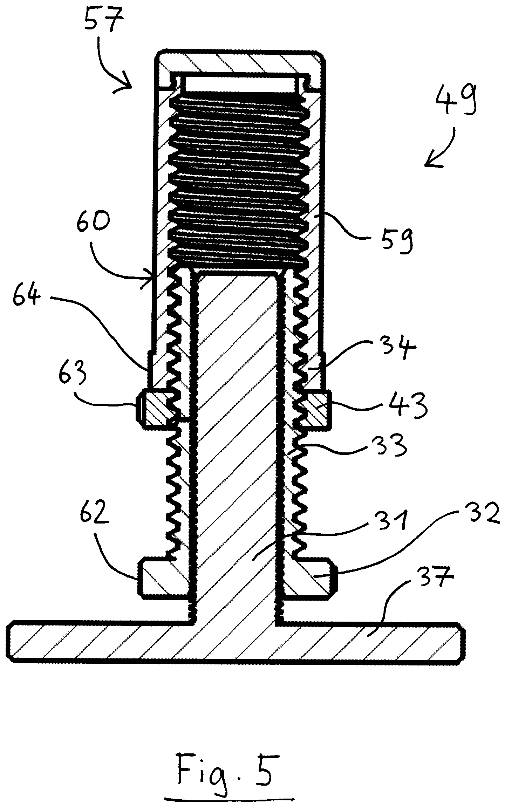

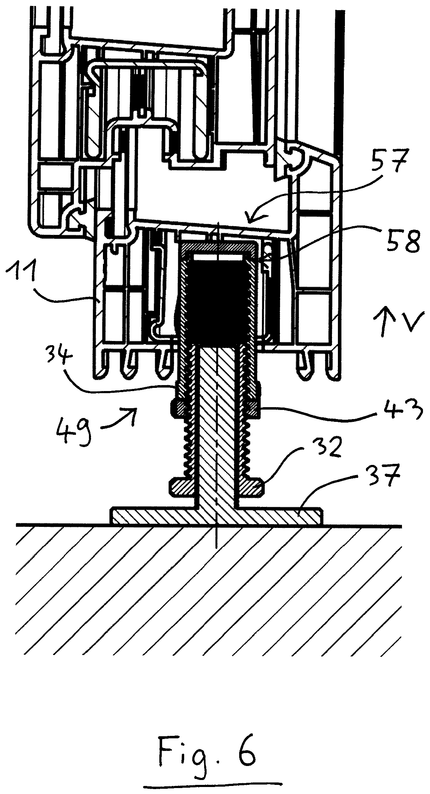

Die Fig. 4 bis 6 zeigen eine alternative Ausführungsform eines Distanzelements 49, das ähnlich aufgebaut ist wie das in den Fig. 1 bis 3 dargestellte Distanzelement 19, jedoch für eine geringere Bauhöhe ausgelegt ist. Zu diesem Zweck weist der Kopplungsabschnitt 57 einen Schaft 59 auf, der zum Einstecken in eine am Blendrahmen 11 vorgesehene Schaftaufnahme 58 (Fig. 6) ausgebildet ist. Bei dem dargestellten Ausführungsbeispiel weist der Schaft 57 eine zylindrische Mantelfläche 60 auf. Von dieser stehen zwei federnde Rastzungen 61 ab (Fig. 4). Die federnden Rastzungen 61 ermöglichen ein Einschnappen des Kopplungsabschnitts 57 in die Schaftaufnahme 58.

Das in den Fig. 4 bis 6 dargestellte Distanzelement 49 weist ebenfalls eine erste Gewindespindel 31, eine mit dieser zusammenwirkende erste Spindelmutter 32, eine zweite Gewindespindel 33, eine mit dieser zusammenwirkende zweite Spindelmutter 34, eine Kontermutter 43 sowie einen Anlageabschnitt 35 in Form einer Stützplatte 37 auf. Im Unterschied zur Ausführungsform gemäß Fig. 1 bis 3 weisen die erste Gewindespindel 31 und die erste Spindelmutter 32 jedoch ein Feingewinde auf, während die zweite Gewindespindel 33 und die zweite Spindelmutter 34 ein Regelgewinde aufweisen. Außerdem ist die erste Gewindespindel 31 einstückig mit der Stützplatte 37 ausgebildet. Die zweite Spindelmutter 34 ist ferner einstückig mit dem Schaft 59 ausgebildet.

Die erste Spindelmutter 32, die Kontermutter 43 sowie die zweite Spindelmutter 34 weisen jeweilige Betätigungsabschnitte 62, 63, 64 auf, die mit Kantprofilen 68 versehen sind. Dies ermöglicht ein Verdrehen mittels eines Werkzeugs wie zum Beispiel eines Gabelschlüssels. Hinweiszeichen 47 sind ebenfalls vorgesehen. Die Verstellung der zweiten Spindelmutter 34 ist vor der Befestigung des Kopplungsabschnitts 57 am Fenster 10 vorzunehmen.

Die Bauhöhe des in den Fig. 4 bis 6 gezeigten Distanzelements 49 ist dadurch verringert, dass der Kopplungsabschnitt 57 teilweise innerhalb des Blendrahmens 11 angeordnet ist, wenn das Fenster 10 eingebaut ist. Außerdem benötigen die Kantprofile 68 nur eine geringe Bauhöhe.

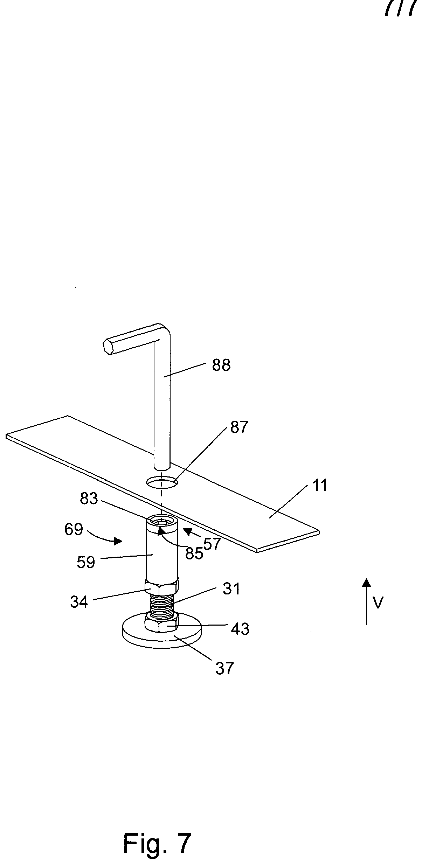

Fig. 7 zeigt eine weitere Ausführungsform eines Distanzelements 69 einer erfindungsgemäßen Positioniervorrichtung 17. Dieses ist weitgehend wie das Distanzelement 49 gemäß Fig. 4 bis 6 gestaltet, wobei jedoch an der ersten Gewindespindel 31 ein Formschlussmerkmal 83 in Form eines Innensechskantprofils ausgebildet ist, das durch eine Ausnehmung 85 des Kopplungsabschnitts 57 zugänglich ist. Da auch im Blendrahmen 11 eine entsprechende Ausnehmung 87 vorgesehen ist, kann die erste Gewindespindel 31 mittels eines Werkzeugs 88 auch dann noch verdreht werden, wenn kein seitlicher Zugang zu dem Spalt zwischen dem Blendrahmen 11 und der Gebäudeöffnung 15 mehr möglich ist.

Unter Bezugnahme auf Fig. 1 werden nachstehend die Neigungsprüfeinrichtungen 25 der erfindungsgemäßen Positioniervorrichtung 17 erläutert. Jede der beiden Neigungsprüfeinrichtungen 25 umfasst einen leistenförmigen Grundkörper 70, der vorzugsweise aus einem Kunststoff, insbesondere aus einem Regranulat, gefertigt ist. Dieser weist eine ebene Anlagefläche 71 zum Anlegen des Grundkörpers 70 an eine Außenfläche des Blendrahmens 11 auf. An der Anlagefläche 71 sind in Fig. 1 nicht sichtbare Befestigungsmittel angeordnet, bei welchen es sich insbesondere um ähnliche Rasthaken wie die in Fig. 3 für das Distanzelement 19 gezeigten Rasthaken 29 handeln kann. Mittels der Befestigungsmittel kann die Neigungsprüfeinrichtung 25 lösbar am Blendrahmen 11 angebracht werden.

In den Grundkörper 70 sind zwei Libellen 75 integriert, die um 90° zueinander versetzt ausgerichtet sind. Während der Positionierung des Fensters 10 in der Gebäudeöffnung 15 kann somit fortlaufend die Neigung des Fensters 10 überprüft werden, ohne dass hierfür eine Wasserwaage an den Blendrahmen 11 angelegt und an diesem gehalten werden muss. Da die Neigungsprüfeinrichtungen 25 aus kostengünstigen Komponenten zusammengesetzt sind, ist es nicht zwingend erforderlich, sie vor dem Verschrauben und Einschäumen des Fensters 10 vom Blendrahmen 11 zu entfernen. Eine Wiederverwendung der Neigungsprüfeinrichtungen 25 kann jedoch je nach Anwendung wünschenswert sein. Grundsätzlich ist es auch möglich, anstatt einer oder mehrerer Libellen 75 einen digitalen Neigungsanzeiger oder dergleichen zu verwenden.

Die Erfindung ermöglicht einen beträchtlich vereinfachten Einbau von Fenstern 10 und Türen in Gebäudeöffnungen 15, wobei ein besonderer Vorteil darin besteht, dass bei einer Auslieferung eines Fensters 10 mit angebrachten Distanzelementen 19, 49, 69 und Neigungsprüfeinrichtungen 25 im Prinzip kein eigenes Material und keine eigenen Gerätschaften vom Monteur bereitgestellt werden müssen.

### Bezugszeichenliste

- 10: Fenster
- 11: Blendrahmen
- 13: Flügel
- 15: Gebäudeöffnung
- 17: Positioniervorrichtung
- 19: Distanzelement
- 20: Umrandung
- 25: Neigungsprüfeinrichtung
- 27: Kopplungsabschnitt
- 29: Rasthaken
- 30: Profilvorsprung
- 31: erste Gewindespindel
- 32: erste Spindelmutter
- 33: zweite Gewindespindel
- 34: zweite Spindelmutter
- 35: Anlageabschnitt
- 37: Stützplatte
- 38: Anlagefläche
- 39: Kugelkopf
- 40: Kugelkopfaufnahme
- 41: Kugelgelenk
- 43: Kontermutter
- 44: Betätigungsabschnitt
- 45: Betätigungsabschnitt
- 46: Griffmerkmal
- 47: Hinweiszeichen
- 48: Riffelung
- 49: Distanzelement
- 57: Kopplungsabschnitt
- 58: Schaftaufnahme
- 59: Schaft
- 60: Mantelfläche
- 61: Rastzunge
- 62: Betätigungsabschnitt
- 63: Betätigungsabschnitt
- 64: Betätigungsabschnitt
- 68: Kantprofil
- 70: Grundkörper
- 71: Anlagefläche
- 75: Libelle
- 80: Durchführung
- 81: Schraube
- 83: Formschlussmerkmal
- 85: Ausnehmung
- 87: Aussparung
- 88: Werkzeug
- V: Verstellrichtung

## Patentansprüche

1. Vorrichtung (17) zum Positionieren eines Fensters (10) oder einer Tür in einer Gebäudeöffnung (15), mit wenigstens einem Distanzelement (19, 49, 69), das einen Kopplungsabschnitt (27, 67) für eine Kopplung mit dem Fenster (10) oder der Tür und einen zum Anlegen an eine Umrandung (20) der Gebäudeöffnung (15) ausgebildeten Anlageabschnitt (35) aufweist, wobei für eine Verschiebung des Fensters (10) oder der Tür innerhalb der Gebäudeöffnung (15) eine Verstelleinrichtung vorgesehen ist, mittels welcher der Anlageabschnitt (35) relativ zu dem Kopplungsabschnitt (27, 57) in und entgegen einer Verstellrichtung (V) verstellbar ist, wobei die Verstelleinrichtung eine sich entlang der Verstellrichtung (V) erstreckende erste Gewindespindel (31) aufweist, die in oder entgegen der Verstellrichtung (V) am Kopplungsabschnitt (27, 57) oder am Anlageabschnitt (35) abstützbar ist und mit einer in der entgegengesetzten Richtung am anderen Element von Kopplungsabschnitt (27, 57) und Anlageabschnitt (35) abstützbaren ersten Spindelmutter (32) zusammenwirkt, **dadurch gekennzeichnet, dass** die Verstelleinrichtung eine zweite Gewindespindel (33) aufweist, die sich entlang der Verstellrichtung (V) erstreckt und derart mit einer zweiten Spindelmutter (34) zusammenwirkt, dass sowohl durch ein Verdrehen der ersten Spindelmutter (32) gegenüber der ersten Gewindespindel (31) als auch durch ein Verdrehen der zweiten Spindelmutter (34) gegenüber der zweiten Gewindespindel (33) der Anlageabschnitt (35) relativ zu dem Kopplungsabschnitt (27, 57) in und entgegen der Verstellrichtung (V) verstellbar ist,
wobei die erste Gewindespindel (31) und die zweite Gewindespindel (33) unterschiedliche Gewindesteigungen aufweisen.

2. Vorrichtung nach Anspruch 1,
dadurch **gek**e**nnzeichnet,** dass
an der ersten Gewindespindel (31) und/oder an der ersten Spindelmutter (32) ein Betätigungsabschnitt (44) für ein direktes manuelles Verdrehen der ersten Gewindespindel (31) gegenüber der ersten Spindelmutter (32) durch einen Benutzer vorgesehen ist.

3. Vorrichtung nach Anspruch 2,
**dadurch gekennzeichnet, dass**
der Betätigungsabschnitt (44) ein Griffmerkmal (46) und/oder ein Formschlussmerkmal (68), insbesondere eine Riffelung und/oder ein Kantprofil, aufweist und/oder dass
der Betätigungsabschnitt (44) einstückig mit der ersten Gewindespindel (31) oder mit der ersten Spindelmutter (32) ausgebildet ist.

4. Vorrichtung nach zumindest einem der vorstehenden Ansprüche,
**dadurch gekennzeichnet, dass**
der Anlageabschnitt (35) eine Stützplatte (37) umfasst und/oder dass
die erste Gewindespindel (31) mit einer zum Feststellen der ersten Spindelmutter (32) vorgesehenen Kontermutter (43) zusammenwirkt.

5. Vorrichtung nach einem der vorstehenden Ansprüche,
**dadurch gekennzeichnet, dass**
die zweite Gewindespindel (33) drehfest mit der ersten Spindelmutter (32) gekoppelt und vorzugsweise einstückig mit dieser ausgebildet ist oder dass
die erste Gewindespindel (31) drehfest mit der zweiten Spindelmutter (34) gekoppelt und vorzugsweise einstückig mit dieser ausgebildet ist.

6. Vorrichtung nach Anspruch 5,
**dadurch gekennzeichnet, dass**
die erste Spindelmutter (32) und/oder die zweite Spindelmutter (34) gegenüber dem Kopplungsabschnitt (27, 57) drehbar gelagert ist.

7. Vorrichtung nach einem der vorstehenden Ansprüche,
**dadurch gekennzeichnet, dass**
die erste Gewindespindel (31) ein Regelgewinde und die zweite Gewindespindel (33) ein Feingewinde aufweist, oder umgekehrt.

8. Vorrichtung nach zumindest einem der vorstehenden Ansprüche,
**dadurch gekennzeichnet, dass**
der Kopplungsabschnitt (27, 57), der Anlageabschnitt (35), die erste Gewindespindel (31) und/oder die erste Spindelmutter (32) aus einem Kunststoff, insbesondere aus einem Regranulat, gefertigt ist/sind.

9. Vorrichtung nach zumindest einem der vorstehenden Ansprüche,
**dadurch gekennzeichnet, dass**
der Kopplungsabschnitt (27, 57) für eine form- oder kraftschlüssige Verbindung, insbesondere für eine Rast-, Schnapp- oder Klipsverbindung, mit einem Blendrahmenprofil des Fensters (10) oder der Tür ausgebildet ist und/oder dass
der Kopplungsabschnitt (27, 57) wenigstens ein federndes Rastelement (29, 61) zum Hintergreifen eines am Blendrahmenprofil vorgesehenen Profilvorsprungs (30) aufweist und/oder dass
der Kopplungsabschnitt (27, 57) einen Schaft (59) aufweist, der zum Einstecken in eine am Blendrahmenprofil vorgesehene Aufnahme (58) ausgebildet ist.

10. Vorrichtung nach zumindest einem der vorstehenden Ansprüche,
**dadurch gekennzeichnet, dass**
das Distanzelement (19) eine Durchführung (80) für ein Befestigungsmittel (81) aufweist, die sich von dem Kopplungsabschnitt (27) bis zum Anlageabschnitt (35) durch das gesamte Distanzelement (19) hindurch erstreckt und/oder dass
an der ersten Gewindespindel (31) oder an der ersten Spindelmutter (32) ein Formschlussmerkmal (83), insbesondere ein Kantprofil, ausgebildet ist, das durch eine Ausnehmung (85) des Kopplungsabschnitts (57) zugänglich ist, und/oder dass
der Kopplungsabschnitt (27) und der Anlageabschnitt (35) über ein Gelenk (41) miteinander in Verbindung stehen, insbesondere über ein Kugelgelenk.

## Claims

1. An apparatus (17) for positioning a window (10) or a door in a building opening (15), said apparatus (17) comprising at least one spacer element (19, 49, 69) which has a coupling section (27, 67) for a coupling to the window (10) or to the door and a contact section (35) configured for a placement at a border (20) of the building opening (15), wherein an adjustment device is provided for a displacement of the window (10) or of the door within the building opening (15), by means of which adjustment device the contact section (35) is adjustable relative to the coupling section (27, 57) in and against an adjustment direction (V), wherein
the adjustment device has a first threaded spindle (31) which extends along the adjustment direction (V), which can be supported in or against the adjustment direction (V) at the coupling section (27, 57) or at the contact section (35) and which cooperates with a first spindle nut (32) which can be supported in the opposite direction at the other one of the coupling section (27, 57) and contact section (35), **characterized in that**
the adjustment device has a second threaded spindle (33) which extends along the adjustment direction (V) and which cooperates with a second spindle nut (34) such that the contact section (35) is adjustable relative to the coupling section (27, 57) in and against the adjustment direction (V) both by a rotation of the first spindle nut (32) with respect to the first threaded spindle (31) and by a rotation of the second spindle nut (34) with respect to the second threaded spindle (33), with the first threaded spindle (31) and the second threaded spindle having different thread pitches.

2. An apparatus in accordance with claim 1,
**characterized in that**
an actuation section (44) is provided at the first threaded spindle (31) and/or
at the first spindle nut (32) for a direct manual rotation of the first threaded spindle (31) with respect to the first spindle nut (32) by a user.

3. An apparatus in accordance with claim 2,
**characterized in that**
the actuation section (44) has a grip feature (46) and/or a form-fit feature (68), in particular a grooving and/or an edge section; and/or **in that**
the actuation section (44) is formed in one piece with the first threaded spindle (31) or with the first spindle nut (32).

4. An apparatus in accordance with at least one of the preceding claims,
**characterized in that**
the contact section (35) comprises a support plate (37); and/or **in that**
the first threaded spindle (31) cooperates with a counter nut (43) provided for fixing the first spindle nut (32).

5. An apparatus in accordance with any one of the preceding claims,
**characterized in that**
the second threaded spindle (33) is rotationally fixedly coupled to the first spindle nut (32) and is preferably formed in one piece therewith; or **in that**
the first threaded spindle (31) is rotationally fixedly coupled to the second spindle nut (34) and is preferably formed in one piece therewith.

6. An apparatus in accordance with claim 5,
**characterized in that**
the first spindle nut (32) and/or the second spindle nut (34) is/are rotatably supported with respect to the coupling section (27, 57).

7. An apparatus in accordance with any one of the preceding claims,
**characterized in that**
the first threaded spindle (31) has a coarse pitch thread and the second threaded spindle (33) has a fine pitch thread, or vice versa.

8. An apparatus in accordance with at least one of the preceding claims,
**characterized in that**
the coupling section (27, 57), the contact section (35), the first threaded spindle (31) and/or the first spindle nut (32) is/are produced from a plastic, in particular from regrind.

9. An apparatus in accordance with at least one of the preceding claims,
**characterized in that**
the coupling section (27, 57) is configured for a form-fitted or force-transmitting connection, in particular for a latch connection, a snap-in connection or a clip-in connection, with a frame section of the window (10) or of the door; and/or **in that**
the coupling section (27, 57) has at least one resilient latching element (29, 61) for engaging behind a section projection (30) provided at the frame section; and/or **in that**
the coupling section (27, 57) has a shaft (59) which is configured for an insertion into a receiver (58) provided at the frame section.

10. An apparatus in accordance with at least one of the preceding claims,
**characterized in that**
the spacer element (19) has a leadthrough (80) for a fastening means (81), said leadthrough (80) extending through the total spacer element (19) from the coupling section (27) up to the contact section (35); and/or **in that** a form-fit feature (83), in particular an edge section, is formed at the first threaded spindle (31) or at the first spindle nut (32) and is accessible through a recess (85) of the coupling section (57); and/or **in that** the coupling section (27) and the contact section (35) are in connection with one another via a joint (41), in particular via a ball joint.

## Revendications

1. Dispositif (17) pour positionner une fenêtre (10) ou une porte dans une ouverture de bâtiment (15), comprenant au moins un élément d'écartement (19, 49, 69) qui présente une portion d'accouplement (27, 67) pour l'accouplement à la fenêtre (10) ou à la porte et une portion d'appui (35) réalisée pour s'appuyer contre un rebord (20) de l'ouverture de bâtiment (15), dans lequel
un dispositif de réglage est prévu pour un déplacement de la fenêtre (10) ou de la porte à l'intérieur de l'ouverture de bâtiment (15), au moyen duquel la portion d'appui (35) peut être déplacée par rapport à la portion d'accouplement (27, 57) dans une direction de réglage (V) et en sens opposé à celle-ci,
le dispositif de réglage présente une première broche filetée (31) s'étendant le long de la direction de réglage (V), qui peut s'appuyer contre la portion d'accouplement (27, 57) ou contre la portion d'appui (35) dans la direction de réglage (V) ou en sens opposé à celle-ci et qui coopère avec un premier écrou de broche (32) qui peut s'appuyer en sens opposé contre l'autre élément parmi la portion d'accouplement (27, 57) et la portion d'appui (35), **caractérisé en ce que**
le dispositif de réglage comprend une second broche filetée (33) qui s'étend le long de la direction de réglage (V) et qui coopère avec un second écrou de broche (34) de telle sorte que la portion d'appui (35) peut être déplacée par rapport à la portion d'accouplement (27, 57) dans la direction de réglage (V) et en sens opposé à celle-ci aussi bien par une rotation du premier écrou de broche (32) par rapport à la première broche filetée (31) que par une rotation du second écrou de broche (34) par rapport à la seconde broche filetée (33),
la première broche filetée (31) et la seconde broche filetée (33) présentant différents pas de filetage.

2. Dispositif selon la revendication 1,
**caractérisé en ce que**
une portion d'actionnement (44) est prévue sur la première broche filetée (31) et/ou sur le premier écrou de broche (32) pour une rotation manuelle directe de la première broche filetée (31) par rapport au premier écrou de broche (32) par l'intermédiaire d'un utilisateur.

3. Dispositif selon la revendication 2,
**caractérisé en ce que**
la portion d'actionnement (44) présente un élément de préhension (46) et/ou un élément de coopération de forme (68), en particulier une cannelure et/ou un profilé polygonal,
et/ou **en ce que**
la portion d'actionnement (44) est réalisée d'un seul tenant avec la première broche filetée (31) ou avec le premier écrou de broche (32).

4. Dispositif selon l'une au moins des revendications précédentes,
**caractérisé en ce que**
la portion de butée (35) comprend une plaque de support (37) et/ou **en ce que**
la première broche filetée (31) coopère avec un écrou de blocage (43) prévu pour immobiliser le premier écrou de broche (32).

5. Dispositif selon l'une au moins des revendications précédentes,
**caractérisé en ce que**
la seconde broche filetée (33) est couplée solidairement en rotation au premier écrou de broche (32) et est de préférence réalisée d'un seul tenant avec celui-ci, ou **en ce que**
la première broche filetée (31) est couplée solidairement en rotation au second écrou de broche (34) et est de préférence réalisée d'un seul tenant avec celui-ci.

6. Dispositif selon la revendication 5,
**caractérisé en ce que**
le premier écrou de broche (32) et/ou le second écrou de broche (34) est monté de manière à pouvoir tourner par rapport à la portion d'accouplement (27, 57).

7. Dispositif selon l'une des revendications précédentes,
**caractérisé en ce que**
la première broche filetée (31) présente un filetage à pas gros, et la seconde broche filetée (33) présente un filetage à pas fin, ou inversement.

8. Dispositif selon l'une au moins des revendications précédentes,
**caractérisé en ce que**
la portion d'accouplement (27, 57), la portion d'appui (35), la première broche filetée (31) et/ou le premier écrou de broche (32) est/sont fabriqué(e)(s) en matière plastique, en particulier en matière rebroyée.

9. Dispositif selon l'une au moins des revendications précédentes,
**caractérisé en ce que**
la portion d'accouplement (27, 57) est réalisée pour une liaison par coopération de forme ou de force, en particulier pour une liaison par enclenchement, par encliquetage ou par clipsage, avec un profilé de cadre dormant de la fenêtre (10) ou de la porte, et/ou **en ce que**
la portion d'accouplement (27, 57) présente au moins un élément d'enclenchement élastique (29, 61) destiné engager par l'arrière une saillie de profilé (30) prévue sur le profilé de cadre dormant, et/ou **en ce que**
la portion d'accouplement (27, 57) présente une tige (59) qui est réalisée pour être enfichée dans un logement (58) prévu sur le profilé de cadre dormant.

10. Dispositif selon l'une au moins des revendications précédentes,
**caractérisé en ce que**
l'élément d'écartement (19) présente un passage (80) pour un moyen de fixation (81), passage qui s'étend depuis la portion d'accouplement (27) jusqu'à la portion d'appui (35) à travers tout l'élément d'écartement (19), et/ou **en ce que**
un élément de coopération de forme (83), en particulier un profilé polygonal, est réalisé sur la première broche filetée (31) ou sur le premier écrou de broche (32), élément qui est accessible à travers un évidement (85) de la portion d'accouplement (27), et/ou **en ce que**
la portion d'accouplement (27) et la portion d'appui (35) sont reliées entre elles par une articulation (41), en particulier par une articulation à rotule.
